# EUROPEAN PATENT APPLICATION

(11) **EP 2 846 308 A2**
(43) Date of publication of application: **11.03.2015**
(21) Application number: 14000521.6
(22) Date of filing: 13.02.2014
(51) Int. Cl.: G06T 7/00

(54) **Pointing direction detecting device and its method, program and computer readable-medium**

(30) Priority: 05.09.2013 TW 102132028
(71) Applicant: Utechzone Co., Ltd., 235 New Taipei City (TW)
(72) Inventor: Lin, Chieh-Yu, 235 NEW Taipei City (TW); Chen, Yi-Wen, 235 NEW Taipei City (TW)
(74) Representative: Müller-Boré & Partner Patentanwälte PartG mbB

(57) **Abstract**

The present invention provides a pointing-direction detecting device, comprising an image capturing unit for capturing a user's image to acquire the user's skeleton data in the world coordinate system; and a processing unit connected to the image capturing unit. The processing unit comprises an image analyzing module and a pointing-direction analyzing module. The image analyzing module acquires the skeleton data from the image capturing unit and captures an upper limb image of the skeleton data to obtain respectively a hand-terminal region and an elbow or shoulder region. The pointing-direction analyzing module obtains the hand-terminal region and the elbow or shoulder region from the image analyzing module to identify through calculation a hand-terminal position and an elbow or shoulder position, obtaining a pointing-direction vector from the hand-terminal position and the elbow or shoulder position for calculating the intersection of the extension of the pointing-direction vector and the target plane.

## Description

### BACKGROUND OF THE INVENTION

### 1. Technical Field

The present invention relates to a device for detecting the pointing-direction. More particularly, the present invention relates to a pointing-direction detecting device for analyzing the vector between the user's hand terminal and elbow or shoulder in order to identify its projection point on the display screen.

### 2. Description of Related Art

As the image processing technology develops, the interactions between human beings and computers has embraced a new diversity in addition to the traditional monotonous operation interface. Nowadays, image manipulation technology has been widely applied to video games, presentation system, advertising, etc. This development has not only brought user experience to a new level but also presented the great potential of the field for the coming future. However, most current image manipulation methods - such as mouses with directional lights or data gloves that record tracked movements - still require an input device at hand, which cannot directly communicate body movements to computers/machines and are therefore not convenient enough.

To solve the foregoing problem, the applicant of the present invention proposed a pointing-direction image manipulation technology before, and the patent application of this technology was laid-opened as Taiwan patent publication no. 201337639. The pointing-direction image manipulation device disclosed in TW 201337639 comprises an image capturing unit that captures images of users, and a pointing-direction processing unit that analyzes the user images to find out the fingers, palms, elbows, and arms of the user. The device can generate a virtual pointing-directional vector through the connection of image data between the user's fingers and the group consisting of the user's palm, elbow, and arm to identify the intersection of the virtual pointing-directional vector and the display screen. Thus, by analyzing images of the user's hand, the prior art can detect the target position the user is pointing at without requiring the user to have any input device at hand.

However, if the user stretch multiple fingers simultaneously and point each of them toward a different direction, the prior art will fail to correctly identify the intended direction. In addition, if the camera is too far from the user, the images of the user's fingers may overlap with other parts of the hand in the image and become difficult to be recognized, making projection line unable to correctly reflect the intended direction. Because of these problems, there is surely the need to improve the prior art.

### SUMMARY OF THE INVENTION

The problem to be solved in this present invention lies in that when capturing the user's finger image, the user may stretch more than one finger or the finger's image may overlap with the other portion, so that the point-direction would hardly be recognized.

To solve the above mentioned problems, one aspect of the present invention is to provide a pointing-direction detecting device, comprising: an image capturing unit for capturing an image of a user to acquire the user's skeleton data in the world coordinate system; and a processing unit, comprising an image analyzing module and a pointing-direction analyzing module, wherein the image analyzing module acquires the skeleton data from the image capturing unit and captures an upper limb image of the skeleton data to obtain respectively a hand terminal region, and an elbow or shoulder region, wherein the pointing-direction analyzing module obtains the hand-terminal region and the elbow or shoulder region from the image analyzing module to calculate a hand-terminal position and an elbow or shoulder position and to obtain a pointing-direction vector from the hand-terminal position and the elbow or shoulder position for calculating the intersection of the extension of the pointing-direction vector and the target plane, wherein the intersection is the user's pointing-direction that the user's hand points toward.

Preferably, the image capturing unit is at least one selected from the group consisting of an active depth camera and a stereo camera.

Preferably, the hand-terminal region is at least one selected from a group consisting of a user's wrist and palm.

Another aspect of the present invention is to provide a pointing-direction detecting method, comprising: a) acquiring and keeping track of a user's skeleton data in the world coordinate system through an image capturing unit; b) capturing the user's upper limb image to obtain respectively a hand-terminal position and an elbow or shoulder position; c) calculating a pointing-direction vector from the elbow or shoulder position to the hand-terminal position; and d) calculating an intersection between an target plane and an extension of the pointing-direction vector to obtain a pointing-direction.

Preferably, the hand-terminal position of step b is obtained by the following steps: sifting a plurality of effective depth parameters nearby a hand-terminal region; and averaging the effective depth parameters to obtain the hand-terminal position and keep tracking.

Preferably, the elbow position of step b is obtained by the following steps: sifting a plurality of effective depth parameters nearby an elbow region connected to the hand-terminal region; and averaging the effective depth parameters to obtain the elbow position.

Preferably, the shoulder position of step b is obtained by the following step: sifting a plurality of effective depth parameters nearby a shoulder region connected to the hand-terminal region; and averaging the effective depth parameters to obtain the shoulder position.

Preferably, the method further comprises a step d1 after step d: d1) determining whether the pointing-direction is projected onto a display: if yes, return the pointing-direction to move a target object to the pointing-direction.

Preferably, the method further comprises a step a0 and a1 before step a: a0) continuously detecting whether there is at least one person entering: if yes, continue to the next step; and a1) continuously detecting whether the person is in the range of an operation region: if yes, execute step a.

Preferably, the pointing-direction of step d is obtained by the following steps: setting up a virtual reference coordinate system according to the projection of the elbow position on a plane of a display screen, and acquiring the vertical distances between the elbow position and the plane of the display screen; calculating a projection of the pointing-direction vector respectively on the y-z plane and x-z plane according to the pointing-direction vector to acquire two angles between the two projections and the z axis; acquiring a temporary coordinate relative to the virtual reference coordinate through the vertical distances and the two angles; and adding the temporary coordinate to the virtual reference coordinate to obtain the pointing-direction toward the plane of the display screen based on the world coordinates.

Preferably, the position of the pointing-direction on the pixel matrix of the display screen is transformed by the following steps: correcting the pointing-direction according to the position of the image capturing unit relative to the origin of the pixel matrix to acquire a relative coordinate of the pointing-direction relative to the origin of the pixel matrix; and inputting the relative coordinate into the pixel proportion transformation function to calculate the unit of the relative coordinate according to the aspect ratio of a pixel on the display screen to acquire the display position of the relative coordinate on the pixel matrix of the display screen.

Preferably, the position of the pointing-direction on the pixel matrix is transformed by the following steps: inputting the pointing-direction into the pixel proportion transformation function to calculate the unit of the relative coordinate according to the aspect ratio of a pixel on the display screen to acquire a temporary display position; and correcting the temporary display position according to the position of the image capturing unit relative to the origin of the pixel matrix to acquire the display position of the temporary display position on the pixel matrix of the display screen.

Preferably, the pointing-direction of step d is obtained by the following steps: setting up a virtual reference coordinate system according to the projection of the hand-terminal position on a plane of a display screen, and acquiring the vertical distances between the hand-terminal position and the plane of the display screen; calculating a projection of the pointing-direction vector respectively on the y-z plane and x-z plane according to the pointing-direction vector to acquire two angles between the two projections and the z axis; acquiring a temporary coordinate relative to the virtual reference coordinate through the vertical distances and the two angles; and adding the temporary coordinate to the virtual reference coordinate to obtain the pointing-direction toward the plane of the display screen based on the world coordinates.

Preferably, the position of the pointing-direction on the pixel matrix is transformed by the following steps: correcting the pointing-direction according to the position of the image capturing unit relative to the origin of the pixel matrix to acquire a relative coordinate of the pointing-direction position relative to the origin of the pixel matrix; and inputting the relative coordinate into the pixel proportion transformation function to calculate the of the relative coordinate according to the aspect ratio of a pixel on the display screen to acquire the display position of the relative coordinate on the pixel matrix of the display screen.

Preferably, the position of the pointing-direction on the pixel matrix is transformed by the following steps: inputting the pointing-direction position into the pixel proportion transformation function to calculate the unit of the relative coordinate according to the aspect ratio of a pixel on the display screen to acquire a temporary display position; and correcting the temporary display position according to the position of the image capturing unit relative to the origin of the pixel matrix to acquire the display position of the temporary display position on the pixel matrix of the display screen.

Preferably, the hand-terminal region is at least one selected from a group consisting of a user's wrist and palm.

A further aspect of the present invention is to provide a computer-readable storage medium installed on an electronic device, wherein the computer-readable storage medium is stored with a pointing-direction detecting method of the present invention.

Still another aspect of the present invention is to provide a pointing-direction detecting program, comprising: an image analyzing module for capturing an upper limb image of skeleton data after acquiring the skeleton data of a user to respectively identify a hand-terminal region and an elbow or shoulder region of the skeleton data; and a pointing-direction analyzing module for acquiring the hand-terminal region and the elbow or shoulder region from the image analyzing module to identify through calculation a hand-terminal position and an elbow or shoulder position for obtaining a pointing-direction vector from the elbow or shoulder position to the hand-terminal position, identifying through calculation an intersection between a target plane and an extension of the pointing-direction vector, wherein intersection is the pointing-direction that the hand points toward.

The present invention has the following benefits compared to the prior art:
1. The present invention takes the hand terminal region of the user instead of the fingers as the reference portion, thereby overcoming the problem of image overlapping and enhancing the efficiency of acquiring valid reference position.
2. The present invention takes the elbow region or the shoulder region of the user as another reference portion. Because the elbow region and the shoulder region are hardly to be covered, the image capturing unit can continuously capture the images of the elbow and the shoulder, diminishing the rate of image compensation and avoiding the possibility of missing the movement of hand in the dynamic operation.

### BRIEF DESCRIPTION OF THE DRAWINGS

The accompanying drawings, together with the specificaions, illustrate the exemplary embodiments of the present invention, and, along with the description, serve to explain the principles of the present invention.
FIG. 1 shows a block diagram of the device of the present invention.
FIG. 2 shows a operation flow chart of the method of the present invention (a).
FIG. 3 shows a operation flow chart of the method of the present invention (b).
FIG. 4 shows an operation schematic diagram of the device of the present invention (a).
FIG. 5 shows an operation schematic diagram of the device of the present invention (b).
FIG. 6 shows an operation schematic diagram of the device of the present invention (c).
FIG. 7 shows an operation schematic diagram of the device of the present invention (d).
FIG. 8 shows an operation schematic diagram of the device of the present invention (e).
FIG. 9 shows a identification flow chart for pointing-direction positions of the device of the present invention.

### DETAILED DESCRIPTION OF THE INVENTION

The device of the present invention for detecting pointing-directions will be described below with with references to the drawings. However, these drawings are only meant for explanations, and therefore do not intend to limit and should not be regarded as limitations on the scope of the present invention.

The terms "a" and "an" here refer to one or more than one (i.e., at least one) of the grammatical objects of the article.

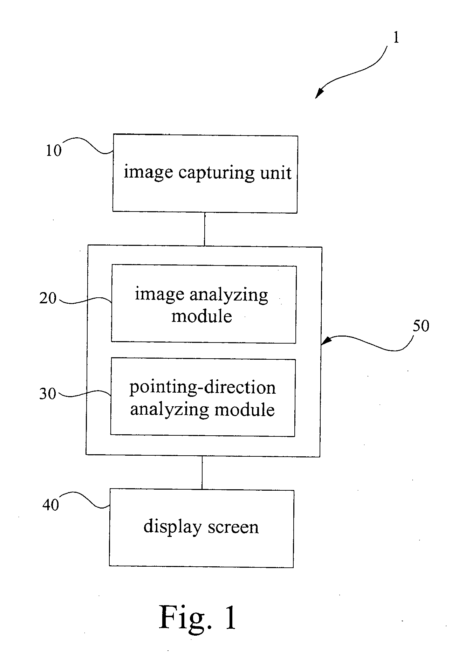

Please refer to FIG. 1, which shows a block diagram of the device of the present invention. As the diagram shows:

The present invention provides a device 1 for detecting the pointing-direction. The device 1 comprises an image capturing unit 10, and a processing unit 50 connected to the image capturing unit 10. In the present embodiment, the pointing-direction detecting device 1 is installed together with a display screen 40 for respective operational functions such as capturing image, image analysis, and image outputting. The image capturing unit 10 can be an active depth camera or a stereo camera. In the present embodiment, the image capturing unit 10 is the active depth camera for explanation.

The processing unit 50 of the present invention mainly comprises an image analyzing module 20 and a pointing-direction analyzing module 30. The main function of the image analyzing module 20 is image analysis, processing, and capture of certain traits. Specifically, the image analyzing module 20 can execute image processing functions like noise reduction, contrast and sharpness adjustment, and coloring of certain traits on the captured images.

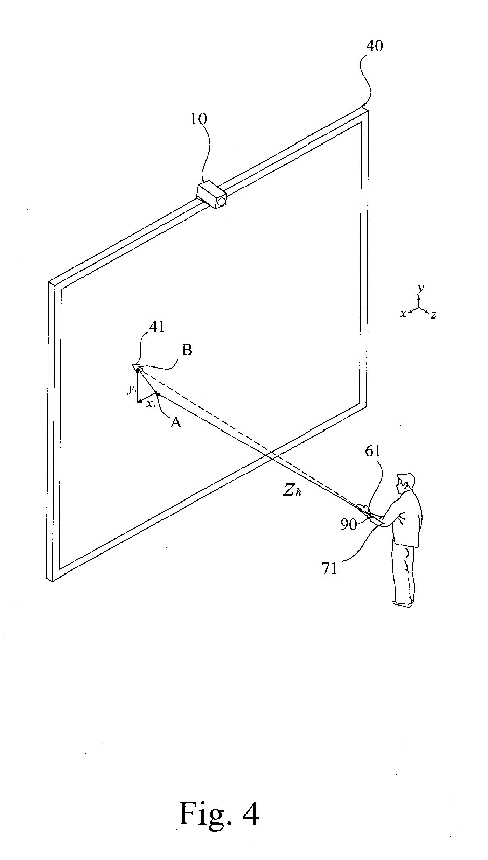

Please also refer to FIG. 4, in the present invention, after the image capturing unit 10 takes pictures, the image analyzing module 20 acquires a plurality of successive depth images from the image capturing unit 10, whereupon the image analyzing module 20 gathers the skeleton data of the user from these images (the skeleton data can be obtained through image matting or image modeling for capturing similar portions from the image) and acquires images of the hand terminal region 60 and the elbow or the shoulder region (in this process, reference points for identification can be obtained by coloring, or blur filtering). The so-called "hand terminal region" 60 comprises a user's wrist, palm, or the combination of both - in other words, the terminal part of the upper extremity. The range of the hand terminal region 60 to be captured can vary according to different image capturing unit 10. The reason is, if the image capturing unit 10 has only a single len, in most cases, the area of the palm is much greater than the wrist, which may cause the wrist portion to be covered at certain view angles and therefore difficult to be acquired. In this condition, capturing the palm portion as the hand terminal region 60 is more accurate than capturing the wrist portion. But in the case of the stereo camera, it is easy to capture the wrist portion, so the palm portion, the wrist portion, or the group consisting of both can be defined as the hand terminal region 60. Moreover, for some image capturing units, the wrist portion and the palm portion are similar parts that do not have to be distinguished, because both of them can be deemed as the end of the upper extremity, whereby the connected blobs (such as the finger portion) can be removed to clearly and easily define and identify the hand terminal region 60 through the images.

The pointing-direction analyzing module 30 is a processing module that can identify the position (in the world coordinates system) of the hand-terminal region 60, the elbow region 70 and/or the shoulder region 80 through the image captured by the image analyzing module 20 and thereby identify two points on the coordinate system, wherein the aforesaid hand terminal region 60, elbow region 70 or the shoulder region 80 are processed and provided by the image analyzing module 20. For example, the image analyzing module 20 identifies the hand terminal region 60, the elbow region 70, and the shoulder region 80 from the image and determines the range to capture. After that, the image analyzing module 20 shapes the surfaces of the captured image into a curve, and detects whether the curve is well formed. Because certain parts of the image may disappear in the interference filtering process, the curve of the image may become unstable and it may be difficult to obtain the reference points. This problem can be resolved with the help of neighborhood averaging method, low-pass filtering method, or multiple image averaging method, smoothing and stabilizing the image for reference points identification (alternatively, reference points can be identified first, followed by the image smoothing process). In addition, if the needed points are covered, it should be taken into account that the image analyzing module 20 should make up for the image. For example, if the captured portion is covered, its area may be incomplete and fractured, but the area can still form a curve surface, whereby its center (the position of the normal vector) can be found through calculation and made up as a complete surface through inferences. The image can be further smoothed for getting corresponding reference points. Alternatively, if the reference point is just covered temporarily, we can utilize the aforesaid compensation method and compare serial images to find out whether the reference point is the correct one.

Meanwhile, the pointing-direction analyzing module 30 obtains a pointing-direction vector through the hand-terminal position 61 and the position of the elbow or the shoulder on the coordinate system (elbow position 71 or shoulder position 81), and finds out the projection point of the pointing-direction vector 90 on the display screen 40 through calculation, whereby the pointing-direction analyzing module obtains the relative coordinates on the two-dimensional coordinate on the display screen 40. The hand-terminal region 60, the elbow region 70, and the shoulder region 80 are the noticeable joints of the upper limb that are difficult to cover and easy to recognize. Therefore, when the user points toward different directions, the intended pointing-direction of the user can be continuously tracked.

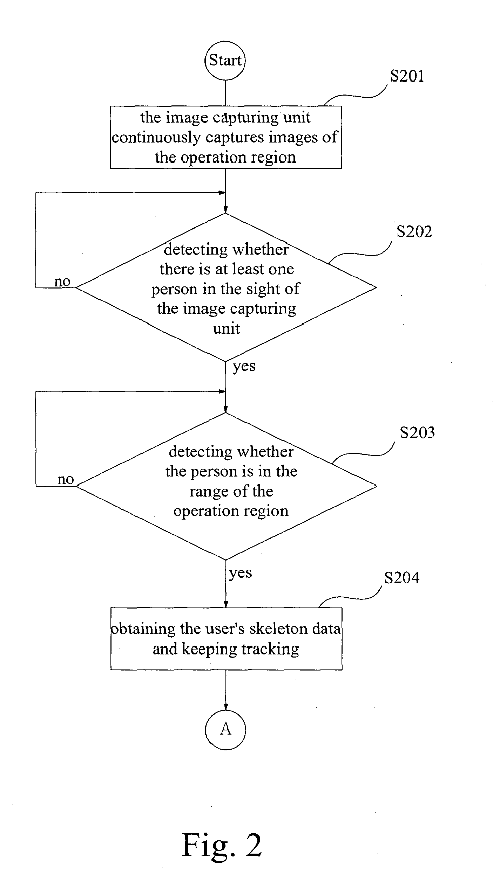

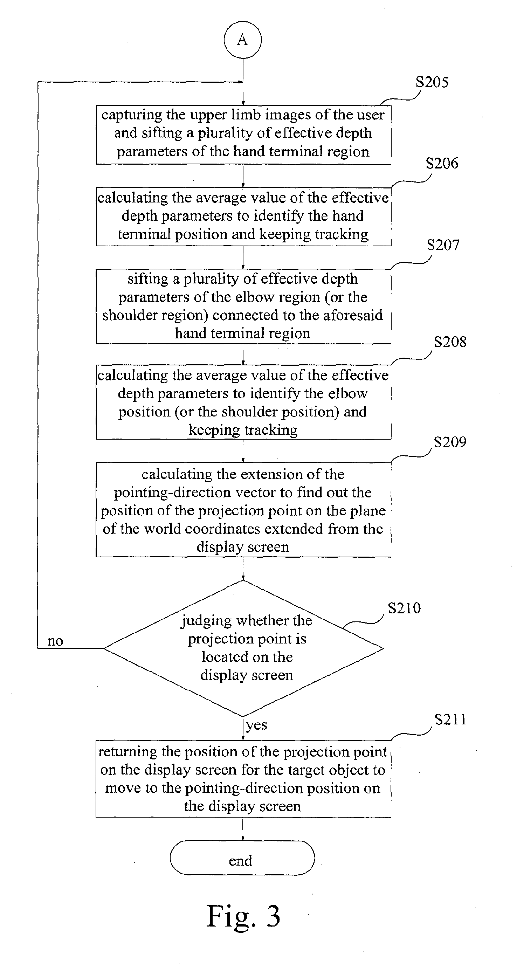

For the detailed operation flow of the present invention, please refer to FIG. 2 and FIG. 3, the operation flow charts of the point-direction detecting method of the present invention.

Please refer to FIG. 2, as the device of the present invention starts, first, the image capturing unit 10 continuously captures the images of the operation region (step S201), and detects whether there is at least one person in the sight of the image capturing unit 10: if yes, the pointing-direction detecting device will continue to the next step; if no, the pointing-direction detecting device will keep operating this step for detection (step S202). After that, the pointing-direction detecting device continuously detects whether the person is in the range of the operation region: if yes, the pointing-direction detecting device will continue to the next step; if no, the pointing-direction detecting device will keep executing this step for detection (step S203). If there is a user in the operation region, the pointing-direction detecting device will obtain the user's (the first person who entered) skeleton data and keep tracking. Afterwards, the image analyzing module 20 captures the upper limb images of the user and sifts a plurality of effective depth parameters of the hand terminal region 60 (step S205) and then calculates the average value of the effective depth parameters to identify the hand terminal position 61 and keeps tracking (step S206). Subsequently, the image analyzing module sifts a plurality of effective depth parameters of the elbow region 70 (or the shoulder region 80) connected to the aforesaid hand-terminal region 60 (step S207), after which the image analyzing module calculates the average value of the effective depth parameters to identify the elbow position 71 (or the shoulder position 81) and keeps tracking (step S208). Afterwards, the pointing-direction detecting device calculates the extension of the pointing-direction vector 90 to find out the position of the projection point on the plane of the world coordinates extended from the display screen 40 (step S209) and judges whether the projection point is located on the display screen: if yes, the pointing-direction detecting device will continue to the next step; if no, the pointing-direction detecting device will go back to step S205 and keep tracking the image of the user's upper limb (step S210). Finally, following the previous step, if the projection point is located on the display screen, the pointing-direction detecting device will return the position of the projection point on the display screen for the target object to move to the pointing-direction position on the display screen (step S211).

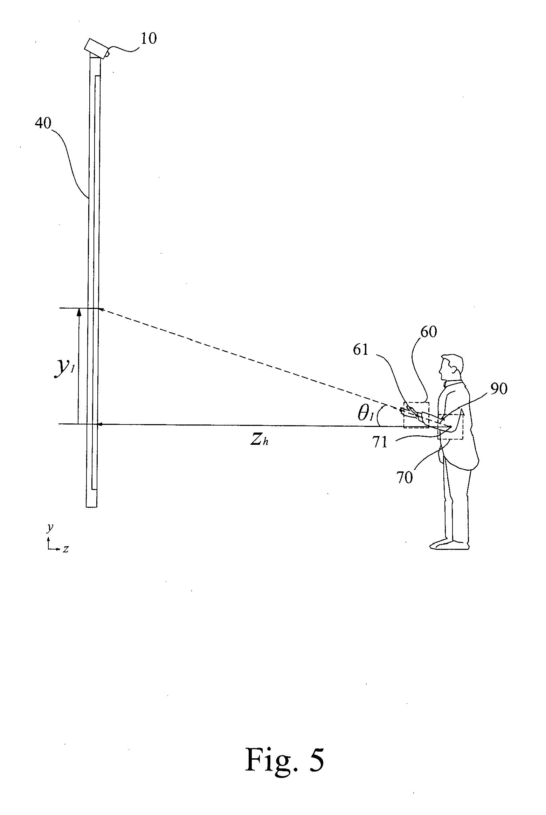

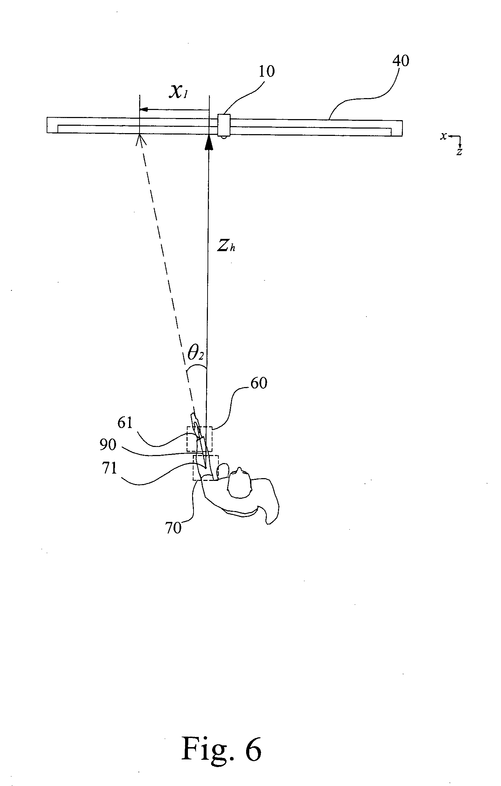

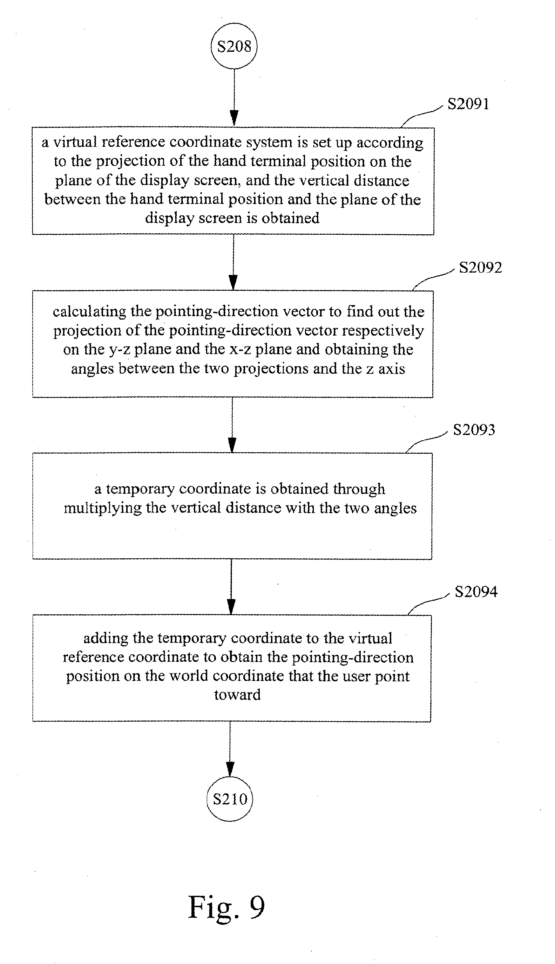

To better understand the detailed calculation flow of pointing-directions of the present invention, please also refer to the operation schematic diagrams from FIG. 4 to FIG. 8 together with the flow chart of FIG. 9.

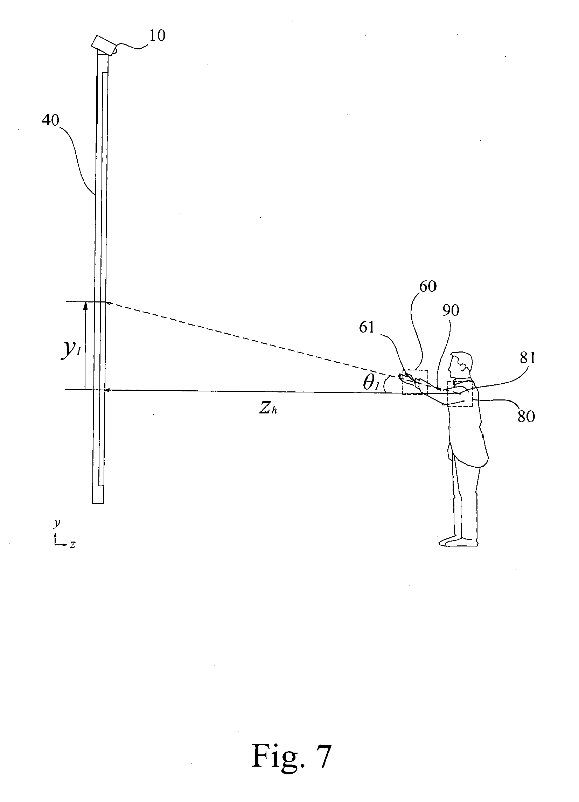

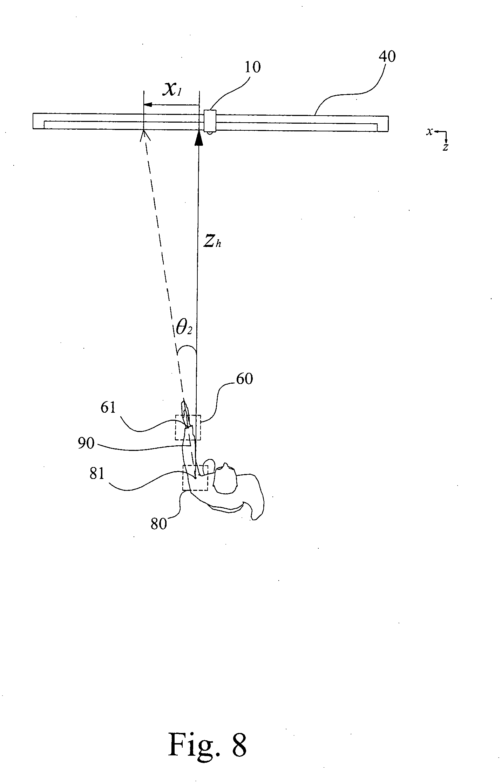

In the embodiment of FIG. 4, FIG. 5, and FIG. 6, the pointing-direction vector 90 is composed by the connection of the hand terminal position 61 and the elbow position 71. In the embodiment of FIG. 7 and FIG. 8, the pointing-direction vector 90 is composed by the connection of the hand terminal position 61 and the shoulder position 81. In step S209, the projection point (the pointing-direction position B) on the plane of the display screen 40 extended from the pointing-direction vector 90 can be obtained through the following calculation flow:

First, a virtual reference coordinate system A(X₀, y₀) should be set up according to the projection of the hand terminal position on the plane of the display screen 40, and the vertical distance Zₕ between the hand terminal position 61 and the plane of the display screen 40 (that is, the distance between the hand terminal position 61 and the plane of the display screen 40 on z axis) should be obtained (step S2091). Then, the pointing-direction detecting device should calculate the pointing-direction vector 90 to find out the projection of the pointing-direction vector 90 respectively on the y-z plane (as shown in FIG. 3) and the x-z plane (as shown in FIG. 4) and obtain the angles *θ* i and the *θ*₂ between the two projections and the z axis (step 2092). After that, the vertical distance Zₕ should be multiplied by tan *θ*₁ and tan *θ*₂ to get a temporary coordinate (X₁, Y₁)=(Zₕtan *θ*₁, Zₕtan *θ*₂) relative to the virtual reference coordinate A (step S2093). The pointing-direction position on the world coordinate that the user point toward can be obtained by adding the temporary coordinate (x₁, y₁) to the virtual reference coordinate A, in other words, it will be B(Zₕtan *θ*₁+X₀, Zₕtan*θ* ₂+y₀).

So far, because the position of the projection point on the display screen 40 that the user's hand points toward is relative to the position of the image capturing unit 10, the position of the pointing-direction B in the world coordinate system acquired by the image capturing unit 10 needs to be transformed to the coordinate on the pixel matrix of the display screen 40. Therefore, the position of the pointing-direction B should be corrected by the following method:

First, the position of the pointing-direction of the user should be corrected according to the position of the image capturing unit 10 relative to the origin of the display screen 40, a correction that transforms the origin of the image capturing unit corresponding to the position of the pointing-direction B into the origin of the display screen 40, thereby acquiring the relative coordinate of the position of the pointing-direction B relative to the origin of the display screen 40. It is important to note that the origin of the display screen 40 usually is located in the upper left corner of the display screen 40. Therefore, the direction of the y-axis in the world coordinate system determined by the image capturing unit 10 is usually opposite to the direction of the y-axis of the display screen 40. When the origin of the world coordinate system is to be transformed into the origin of the pixel matrix, the y-axis value of the relative coordinate should be multiplied by a negative value.

After that, because the position of the world coordinate system is relative to the position of the real world, the coordinate system usually adopts metric units (e.g. millimeter) as its standard, whereas the standard unit of the pixel matrix on the display screen 40 is a pixel (determined by their length and width). Therefore, to obtain the real coordinate of the position of the pointing-direction point on the display screen 40, the relative coordinates should be calculated in a pixel proportion transformation function, taking the length and the width of the pixels into account for obtaining the real position of the relative coordinates on the display screen 40. For example, the length of the pixel of the display screen (in the x-axis) is 1.25mm, and the width of the pixel of the display (in the y-axis) is 1.33mm, so the x-axis coordinates and the y-axis coordinates should multiply by 0.8 and 0.75 respectively to set a pixel as a standard unit.

The two aforesaid correction steps may change their operation sequence, and the changed steps will be:

Input the position of the pointing-direction B into the pixel proportion transformation function to calculate the unit of the coordinate of the pointing-direction position B with the aspect ratio of a pixel on the display screen to obtain a temporary display position. Then, correct the temporary display position according to the position of the image capturing unit 10 relative to the origin of the pixel matrix to obtain the display position of the temporary display position on the pixel matrix of the display screen 40.

On the other hand, depending on different display screen 40, the correction process can have different correction formulas, which shall not be limited in the present invention.

Because the image capturing unit 10 is set in different positions, when calculating the distance between the user and the display screen 40, the image capturing unit 10 should consider the error value generated from the angles between the image capturing unit 10 and the x-axis, y-axis, and z-axis. To eliminate the error value, the pointing-direction detecting device 1 should pre-execute an adjustment process. For example, the pointing-direction detecting device may tag a specific markup point on the screen and lead the user point toward it. Then, the image capturing unit 10 can capture the user's image, which the image analyzing module can in turn analyze and identify the hand terminal region 60, the elbow region 70 or the shoulder region 80 and pinpoints by calculation the position of the aforesaid regions, by whose pointing-direction vector 90 an adjustment formula can be obtained, a formula through which the real position that the user points toward can be recognized. In the adjustment process, the relative coordinates of the image capturing unit 10 and the origin of the display screen 40 can be obtained simultaneously.

Besides, the product of the present invention can be implemented as a software program or a firmware program in cooperation with a processor 50, or implemented on computer-readable storage media, such as compact disks, hard disks, floppy disks, USB flash drives, and so on for operating on electronic devices.

In conclusion, the present invention captures the user's hand terminal region as a reference portion for obtaining the targeted vector, a method more efficient than capturing the user's fingers for obtaining a valid reference position. Besides, the present invention captures the user's elbow region and shoulder region as a reference portion, and since the elbow region and the shoulder region are more unlikely to be covered, the image capturing unit can continuously capture the image of the elbow and the shoulder without losing the image while the user's hand is in dynamic operation.

While the present invention has been described in connection with certain exemplary embodiments, it is to be understood that the invention is not limited to the disclosed embodiments, but, on the contrary, intended to cover various modifications and equivalent arrangements included within the spirit and scope of the appended claims and equivalents thereof.

## Claims

1. A pointing-direction detecting device, comprising:
an image capturing unit for capturing an image of a user to acquire the user's skeleton data in the world coordinate system; and
a processing unit, comprising an image analyzing module and a pointing-direction analyzing module, wherein the image analyzing module acquires the skeleton data from the image capturing unit and captures an upper limb image of the skeleton data to obtain respectively a hand terminal region, and an elbow or shoulder region, wherein the pointing-direction analyzing module obtains the hand-terminal region and the elbow or shoulder region from the image analyzing module to calculate a hand-terminal position and an elbow or shoulder position and to obtain a pointing-direction vector from the hand-terminal position and the elbow or shoulder position for calculating the intersection of the extension of the pointing-direction vector and the target plane, wherein the intersection is the user's pointing-direction that the user's hand points toward.

2. The device of claim 1, wherein the image capturing unit is at least one selected from the group consisting of an active depth camera and a stereo camera.

3. The device of claim 1, wherein the hand-terminal region is at least one selected from a group consisting of a user's wrist and palm.

4. A pointing-direction detecting method, comprising:
a) acquiring and keeping track of a user's skeleton data in the world coordinate system through an image capturing unit;
b) capturing the user's upper limb image to obtain respectively a hand-terminal position and an elbow or shoulder position;
c) calculating a pointing-direction vector from the elbow or shoulder position to the hand-terminal position; and
d) calculating an intersection between an target plane and an extension of the pointing-direction vector to obtain a pointing-direction.

5. The method of claim 4, wherein the hand-terminal position of step b is obtained by the following steps:
sifting a plurality of effective depth parameters nearby a hand-terminal region; and
averaging the effective depth parameters to obtain the hand-terminal position and keep tracking.

6. The method of claim 5, wherein the elbow position of step b is obtained by the following steps:
sifting a plurality of effective depth parameters nearby an elbow region connected to the hand-terminal region; and
averaging the effective depth parameters to obtain the elbow position.

7. The method of claim 5, wherein the shoulder position of step b is obtained by the following step:
sifting a plurality of effective depth parameters nearby a shoulder region connected to the hand-terminal region; and
averaging the effective depth parameters to obtain the shoulder position.

8. The method of claim 4, wherein the method further comprises a step d1 after step d:
d1) determining whether the pointing-direction is projected onto a display: if yes, return the pointing-direction to move a target object to the pointing-direction.

9. The method of claim 4, wherein the method further comprises a step a0 and a1 before step a:
a0) continuously detecting whether there is at least one person entering: if yes, continue to the next step; and
a1) continuously detecting whether the person is in the range of an operation region: if yes, execute step a.

10. The method of claim 4, wherein the pointing-direction of step d is obtained by the following steps:
setting up a virtual reference coordinate system according to the projection of the elbow position on a plane of a display screen, and acquiring the vertical distances between the elbow position and the plane of the display screen;
calculating a projection of the pointing-direction vector respectively on the y-z plane and x-z plane according to the pointing-direction vector to acquire two angles between the two projections and the z axis;
acquiring a temporary coordinate relative to the virtual reference coordinate through the vertical distances and the two angles; and
adding the temporary coordinate to the virtual reference coordinate to obtain the pointing-direction toward the plane of the display screen based on the world coordinates.

11. The method of claim 10, wherein the position of the pointing-direction on the pixel matrix of the display screen is transformed by the following steps:
correcting the pointing-direction according to the position of the image capturing unit relative to the origin of the pixel matrix to acquire a relative coordinate of the pointing-direction relative to the origin of the pixel matrix; and
inputting the relative coordinate into the pixel proportion transformation function to calculate the unit of the relative coordinate according to the aspect ratio of a pixel on the display screen to acquire the display position of the relative coordinate on the pixel matrix of the display screen.

12. The method of claim 10, wherein the position of the pointing-direction on the pixel matrix is transformed by the following steps:
inputting the pointing-direction into the pixel proportion transformation function to calculate the unit of the relative coordinate according to the aspect ratio of a pixel on the display screen to acquire a temporary display position; and
correcting the temporary display position according to the position of the image capturing unit relative to the origin of the pixel matrix to acquire the display position of the temporary display position on the pixel matrix of the display screen.

13. The method of claim 4, wherein the pointing-direction of step d is obtained by the following steps:
setting up a virtual reference coordinate system according to the projection of the hand-terminal position on a plane of a display screen, and acquiring the vertical distances between the hand-terminal position and the plane of the display screen;
calculating a projection of the pointing-direction vector respectively on the y-z plane and x-z plane according to the pointing-direction vector to acquire two angles between the two projections and the z axis;
acquiring a temporary coordinate relative to the virtual reference coordinate through the vertical distances and the two angles; and
adding the temporary coordinate to the virtual reference coordinate to obtain the pointing-direction toward the plane of the display screen based on the world coordinates.

14. The method of claim 13, wherein the position of the pointing-direction on the pixel matrix is transformed by the following steps:
correcting the pointing-direction according to the position of the image capturing unit relative to the origin of the pixel matrix to acquire a relative coordinate of the pointing-direction position relative to the origin of the pixel matrix; and
inputting the relative coordinate into the pixel proportion transformation function to calculate the of the relative coordinate according to the aspect ratio of a pixel on the display screen to acquire the display position of the relative coordinate on the pixel matrix of the display screen.

15. The method of claim 13, wherein the position of the pointing-direction on the pixel matrix is transformed by the following steps:
inputting the pointing-direction position into the pixel proportion transformation function to calculate the unit of the relative coordinate according to the aspect ratio of a pixel on the display screen to acquire a temporary display position; and
correcting the temporary display position according to the position of the image capturing unit relative to the origin of the pixel matrix to acquire the display position of the temporary display position on the pixel matrix of the display screen.

16. The method of claim 4, wherein the hand-terminal region is at least one selected from a group consisting of a user's wrist and palm.

17. A computer-readable storage medium installed on an electronic device, wherein the computer-readable storage medium is stored with a pointing-direction detecting method, including any step described in the claims from claim 4 to 16.

18. A pointing-direction detecting program, comprising:
an image analyzing module for capturing an upper limb image of skeleton data after acquiring the skeleton data of a user to respectively identify a hand-terminal region and an elbow or shoulder region of the skeleton data; and
a pointing-direction analyzing module for acquiring the hand-terminal region and the elbow or shoulder region from the image analyzing module to identify through calculation a hand-terminal position and an elbow or shoulder position for obtaining a pointing-direction vector from the elbow or shoulder position to the hand-terminal position, identifying through calculation an intersection between a target plane and an extension of the pointing-direction vector, wherein intersection is the pointing-direction that the hand points toward.

19. The program of claim 18, wherein the hand-terminal region is at least one selected from a group consisting of a user's wrist and palm.
